# EUROPÄISCHE PATENTSCHRIFT

(11) **EP 0 725 272 B1**
(45) Veröffentlichungstag und Bekanntmachung des Hinweises auf die Patenterteilung: **12.06.2002**
(21) Anmeldenummer: 96810015.6
(22) Anmeldetag: 09.01.1996
(51) Int. Cl.: G01N 30/96

(54) **Vorrichtung zur Ionenchromatografie und Verfahren zum zyklischen Regenerieren von mehreren Suppressoren einer solchen Vorrichtung**
Device for ion chromatography and process for cyclic regeneration of several suppressors in such a device
Dispositif de chromatographie d'ions et procédé cyclique de régénération de plusieurs suppresseurs d'un tel dispositif

(30) Priorität: 01.02.1995 CH 27295
(43) Veröffentlichungstag der Anmeldung: 07.08.1996
(73) Patentinhaber: METROHM AG, 9100 Herisau (CH)
(72) Erfinder: Schäfer, Helwig, 9100 Herisau (CH); Läubli,Markus, CH-9100 Herisau (CH); Zähner, Paul, CH-9100 Herisau (CH)
(74) Vertreter: Hepp, Dieter

(56) Entgegenhaltungen:
- US-A- 3 920 397
- US-A- 4 808 317

## Beschreibung

Die Erfindung betrifft eine Vorrichtung zur Ionenchromatografie und ein Verfahren zum zyklischen Regenerieren von mehreren in einer Vorrichtung zur Ionenchromatografie eingesetzten Suppressoren.

Bei der Ionenchromatografie handelt es sich um eine Form der Flüssigchromatografie, die zur Analyse von ionischen Spezies verwendet wird. Für die Elution werden Elektrolyte verwendet, wobei die Retentionszeiten der einzelnen Ionen durch deren Affinitäten zur stationären Phasen bestimmt werden. Die Detektion der getrennten Ionen erfolgt in der Regel durch Messung der Leitfähigkeit. Bei der sogenannten Einsäulentechnik wird das von der Trennsäule ablaufende Eluat direkt einem Detektor zugeführt. Dies hat den Nachteil, dass die Detektion der zu analysierenden Ionen durch die Leitfähigkeit des verwendeten Elutionsmittels beeinträchtigt wird. Die Leitfähigkeit des Elutionsmittels wird durch die Ionen der zu analysierenden Probe nur unwesentlich verändert und die Detektion dieser Aenderung bereitet erhebliche Schwierigkeiten.

Zur Lösung dieses Problems wurde bereits vor längerer Zeit die Verwendung der sogenannten Zweisäulentechnik vorgeschlagen, bei der das von der Trennsäule ablaufende Eluat zunächst durch eine der Trennsäule nachgeschaltete Suppressorsäule geleitet und erst anschliessend der Detektionseinheit zugeführt wird. Die Suppressorsäule enthält einen Ionentauscher, der dazu geeignet ist, die hohe Hintergrundleitfähigkeit des Elutionsmittels chemisch zu reduzieren. Gleichzeitig wird die zu analysierende Probe nach Möglichkeit in eine stärker leitende Form überführt. Zur Reduktion der Hintergrundleitfähigkeit findet in der Suppressorsäule ein Ionenaustausch statt. Da die Suppressorsäule nur eine begrenzte Ionentausch-Kapazität hat, muss sie von Zeit zu Zeit regeneriert werden. Dazu wird wenigstens eine Behandlungsflüssigkeit durch den Suppressor geleitet. In der Regel handelt es sich bei einer ersten Behandlungsflüssigkeit um eine Säure oder eine Lauge, die zum Aufladen des Ionentauschers verwendet wird, bei einer zweiten Behandlungsflüssigkeit kann es sich z.B. um Wasser handeln, das durch die Suppressorsäule geleitet wird. Dazu müssten abwechslungsweise unterschiedliche Leitungen an die Suppressorsäule angeschlossen werden.

Um diesen Vorgang zu erleichtern wurde in der US-3,920,397 bereits vorgeschlagen, zwei Suppressorsäulen nebeneinander zu verwenden und diese über Mehrwegventile mit den entsprechenden Anschlussleitungen zu verbinden, so dass durch die Wahl der Ventilstellungen abwechslungsweise eine der Suppressorsäulen nacheinander mit den verschiedenen Behandlungsmittel-Quellen verbunden werden kann, währendem die andere mit dem Ausgang der Trennsäule verbunden ist und in einem Analyseprozess benutzt wird. Die Ventilschaltung ermöglicht es, den zwischen der Trennsäule und dem Detektor in den Analysekreis eingekoppelten Suppressor bei Bedarf durch Umschalten der Ventile durch einen regenerierten Suppressor zu ersetzen und den ersetzten Suppressor zur Regeneration mit einer Behandlungsmittel-Quelle zu verbinden. Die dazu erforderliche Ventilanordnung ist allerdings sehr aufwendig: Jede Suppressorsäule hat zwei Anschlussöffnungen und jede dieser Anschlussöffnungen muss mit einem Ventil verbunden sein, durch das es mit verschiedenen Leitungen, die ebenfalls an dem Ventil angeschlossen sein müssen, verbunden werden kann.

Es ist daher eine Aufgabe der Erfindung, eine Möglichkeit zum zyklischen Regenerieren von mehreren Suppressoren zu schaffen, die einen einfacheren Aufbau der zum Anschliessen der verschiedenen Leitungen an die einzelnen Suppressoren benötigten Vorrichtung erlaubt. Diese Aufgabe wird erfindungsgemäss durch ein Verfahren mit den Merkmalen von Anspruch 1 und eine Vorrichtung mit den Merkmalen von Anspruch 3 gelöst.

Im Gegensatz zu den bekannten Systemen, bei denen die verschiedenen Leitungen durch die Wahl einer Ventilstellung einem Suppressor zugeordnet werden, werden hier die Suppressoren selbst relativ zu den Leitungen bewegt um die gewünschte Zuordnung herzustellen. Dazu werden mehrere Leitungszweige verwendet, in welche die Suppressoren abwechselnd eingesetzt werden. Ein erster Leitungszweig verbindet den Ausgang der Trennsäule mit einem Detektor. Dieser Leitungszweig wird im folgenden auch als Analysezweig bezeichnet. Zusätzlich wird wenigstens ein weiterer Leitungszweig verwendet, der im folgenden auch als Behandlungszweig bezeichnet wird. Jeder Leitungszweig weist eine Lücke auf, in die ein Suppressor eingesetzt werden kann. Der Suppressor wird dazu relativ zu dem Leitungszweig in eine Lage bewegt, in der er als Leitungsstück die Lücke des betreffenden Leitungszweigs überbrückt.

Während einer Analyseperiode ist jeweils einer der Suppressoren als Leitungsstück in den Analysezweig eingesetzt. Nach jeweils einer Anlayseperiode wird dieser Suppressor durch einen regenerierten Suppressor ersetzt und der ersetzte Suppressor wird zur Regeneration nacheinander in einen oder mehrere Behandlungszweige eingesetzt, über die jeweils wenigstens eine Behandlungsflüssigkeit durch den eingesetzten Suppressor geleitet wird. Die Dauer einer Analyseperiode kann auf verschiedene Arten festgelegt werden. Es kann sich zum Beispiel um ein festes Zeitintervall handeln, nach dem der in den Analysezweig eingesetzte Suppressor durch einen regenerierten Suppressor ersetzt wird. Bevorzugt wird die Dauer einer Analyseperiode jedoch durch die Dauer der durchzuführenden Analysen bestimmt, wobei der Suppressor nach der Analyse von einer oder mehreren Proben ersetzt wird. Besonders vorteilhaft ist es, wenn der in den Analysezweig eingesetzte Suppressor nach der Analyse von jeweils einer Probe durch einen regenerierten Suppressor ersetzt wird. Dies hat den Vorteil, dass die Analyse jeder einzelnen Probe mit einem frisch regenerierten Suppressor begonnen wird, so dass bei allen Analysen dieselben Rahmenbedingungen gelten.

Wird der zu regenerierende Suppressor in mehrere Behandlungszweige eingesetzt, so geschieht dies in der Regel in einer fest vorgeschriebenen Reihenfolge, so dass die verschiedenen Behandlungsflüssigkeiten in einer bestimmten Reihenfolge durch den Suppressor geleitet werden. Der so regenerierte Suppressor wird später wieder als Ersatz für einen anderen verbrauchten Suppressor in den Analysezweig eingesetzt. Auf diese Weise werden die Suppressoren abwechselnd in den Analysezweig eingesetzt und zyklisch regeneriert.

Durch die Verwendung einzelner Leitungszweige und die Tatsache, dass beim Einsetzen eines Suppressors dieser selbst relativ zu dem betreffenden Leitungszweig bewegt und in eine Lücke desselben eingesetzt wird, kann auf die aufwendigen Ventilschaltungen verzichtet werden. Eine zur Durchführung des Verfahrens geeignete Vorrichtung zur Ionenchromatografie weist neben einem Analysezweig mehrere Behandlungszweige auf, die mit je einer Behandlungsmittel-Quelle verbunden sind, so dass ein Behandlungsmittel durch den in einen solchen Leitungszweig eingesetzten Suppressor geleitet werden kann. Jeder der Leitungszweige weist eine Lücke auf und jeder der Suppressoren ist derart bewegbar gelagert, dass er in Bezug auf jeden Leitungszweig in eine Lage bringbar ist, in der er als Leitungsstück die Lücke des betreffenden Leitungszweigs überbrückt.

Die üblicherweise verwendeten Suppressoren weisen eine erste Anschlussöffnung auf, die durch ein als Ionentauscher-Reservoir dienendes Leitungsstück mit einer zweiten Anschlussöffnung verbunden ist. Die Lücken der Leitungszweige sind durch je zwei Leitungsöffnungen begrenzt. Jeder der Suppressoren ist dabei zum Einsetzen in einen Leitungszweig in eine Lage bringbar, in der jede seiner Anschlussöffnungen auf eine der Leitungsöffnungen der Lücke des betreffenden Leitungszweigs ausgerichtet ist.

Bevorzugt werden wenigstens gleich viele Suppressoren wie Leitungszweige verwendet, die in einer festen Reihenfolge, in der jeder Suppressor einen Vorgänger und einen Nachfolger hat, abwechselnd in die Leitungszweige eingesetzt werden. Dabei ist während jeder Analyseperiode in jedem Leitungszweig ein Suppressor eingesetzt und nach jeweils einer Analyseperiode wird jeder in einen Leitungszweig eingesetzte Suppressor durch seinen Nachfolger ersetzt. Bei diesem Vorgehen haben die Leitungszweige eine bestimmte Reihenfolge, in der jeder Suppressor nacheinander in die einzelnen Leitungszweige eingesetzt wird. Die Reihenfolge der Leitungszweige wird dabei gemäss dem gewünschten Ablauf des Zyklus gewählt, den die Suppressoren zyklisch durchlaufen sollen. In der Regel folgt auf den Analysezweig ein erster Behandlungszweig, durch den zum Regenerieren eines Suppressors eine Säure oder eine Lauge geleitet werden kann und danach einer zweiter Behandlungszweig, durch den zum Spülen des Suppressors eine neutrale Flüssigkeit wie z.B. Wasser geleitete werden kann. Bei diesem Vorgehen werden die Behandlungszweige optimal ausgenützt, da während jeder Analyseperiode in jeden Behandlungszweig ein Suppressor eingesetzt ist. Die Suppressoren können somit besonders schnell regeneriert werden, so dass zum Ersetzen des in den Analysezweig eingesetzten Suppressors bereits nach einer kurzen Analyseperiode ein regenerierter Suppressor zur Verfügung steht.

Die Suppressoren werden vorzugsweise so gelagert, dass sie auf einer geschlossenen Bahn bewegbar sind. Die Lücken der Leitungszweige werden dabei in Bezug auf diese Bahn derart angeordnet, dass jeder Suppressor durch eine entlang seiner Bahn verlaufende Bewegung in einen beliebigen der Leitungszweige einsetzbar ist. Bei der geschlossenen Bahn kann es sich z.B. um eine Kreisbahn handeln, es kann sich jedoch auch um eine andersartige geschlossene Bahn handeln. Charakteristisch für die geschlossene Bahn ist, dass ein Suppressor, wenn er in einer Richtung entlang seiner Bewegungsbahn bewegt wird, schliesslich wieder zu seinem Ausgangspunkt zurückkommt. Die geschlossene Bahn ist daher für das sequentielle, zyklisch zu wiederholende Einsetzen eines Suppressors in mehrere Leitungszweige besonders geeignet. Wenn von einer Bewegung entlang einer geschlossenen Bahn die Rede ist, so betrifft dies im Grunde genommen lediglich die Anschlussbereiche der Suppressoren, die auf die Lücken der Leitungszweige ausgerichtet werden müssen. Handelt es sich z.B. um einen Suppressor mit zwei Anschlussöffnungen, so gilt dieser im Sinne der hier verwendeten Definition als auf einer geschlossenen Bahn bewegbar gelagert, wenn durch Bewegen des Suppressors jede seiner Anschlussöffnungen entlang einer geschlossenen Bahn bewegbar ist.

Grundsätzlich können die einzelnen Suppressoren auf unterschiedlichen Bahnen bewegbar gelagert sein. Dazu ist es allerdings erforderlich, dass die Leitungsöffnungen der Lücke wenigstens eines Leitungszweigs grösser als die Anschlussöffnungen der Suppressoren ist, so dass die Anschlussöffnungen verschiedener Suppressoren an unterschiedlichen Stellen auf diese Leitungsöffnung ausrichtbar sind. Dies wird im Folgenden noch näher erläutert. Ein einfacherer Aufbau der gesamten Anordnung ist allerdings möglich, wenn alle Suppressoren auf einer gemeinsamen, geschlossenen Bahn bewegbar gelagert sind.

Bei den auf einer geschlossenen Bahn bewegbar gelagerten Suppressoren lässt sich der zum Ersetzen der in die verschiedenen Leitungszweige eingesetzten Suppressoren nötige Aufwand wesentlich reduzieren. Die Suppressoren werden dazu durch eine Wirkverbindung derart gekoppelt, dass sie nur gemeinsam bewegt werden können, so dass die Position eines Suppressors von der Position der anderen Suppressoren abhängig ist. Die miteinander verbundenen Suppressoren sind dabei gemeinsam in eine der Anzahl Suppressoren entsprechende Anzahl von Arbeitspositionen bringbar, in denen jeweils ein anderer Suppressor in den Analysezweig eingesetzt ist. Im einfachsten Fall handelt es sich auch hier um eine Anordnung, bei der alle Suppressoren auf einer gemeinsamen, geschlossenen Bahn bewegbar gelagert sind. Benachbarte Suppressoren können dann z.B. durch ein als Wirkverbindung dienendes Distanzelement auf einem bestimmten Abstand gehalten werden. Beispielsweise kann eine über mehrere Kettenräder umlaufende, geschlossene Gliederkette verwendet werden, an der die einzelnen Suppressoren befestigt sind. Eine-alternative Möglichkeit besteht darin, die Suppressoren auf der gemeinsamen Bewegungsbahn so dicht nebeneinander anzuordnen, dass sie sich gegenseitig berühren. Auch in diesem Fall können die Suppressoren nur gemeinsam bewegt werden und es besteht in diesem Sinne ebenfalls eine Wirkverbindung zwischen den Suppressoren. Aber auch wenn nicht alle Suppressoren auf einer gemeinsamen Bewegungsbahn liegen, so können diese dennoch durch eine Wirkverbindung gekoppelt werden um das Ausrichten der Suppressoren auf die Lücken der Leitungszweige zu erleichtern.

Durch das Einsetzen eines Suppressors in den Analysezweig wird aufgrund der zwischen den Suppressoren bestehenden Wirkverbindung in jeden der weiteren Leitungszweige gleichzeitig ebenfalls ein Suppressor eingesetzt. Sind die Suppressoren auf einer gemeinsamen, geschlossenen Bahn gelagert, so werden sie bevorzugt mit gleichen Abständen über die Länge der Bahn verteilt angeordnet. Die Abstände der Leitungszweige bzw. ihrer Lücken werden dabei an die Abstände der Suppressoren angepasst, so dass gleichzeitig in jeden Leitungszweig einer der Suppressoren eingesetzt werden kann.

Eine bevorzugte Art zum Erzeugen einer Wirkverbindung zwischen den einzelnen Suppressoren besteht darin, alle Suppressoren an einem gemeinsamen, bewegbar gelagerten Verbindungskörper zu befestigen. Zusätzliche Vorteile ergeben sich dabei, wenn sich die Anschlussöffnungen der Suppressoren in einer Aussenfläche des Verbindungskörpers befinden und der Verbindungskörper derart bewegbar gelagert ist, dass die Leitungsöffnungen der Leitungszweige immer im Bereich dieser Aussenfläche liegen. Die Leitungsöffnungen werden dabei durch die Aussenfläche des Verbindungskörpers verschlossen, sofern sich nicht die Anschlussöffnung eines Suppressors in ihrem Bereich befindet. Während dem Ersetzen eines Suppressors kann somit keine Flüssigkeit aus der betreffenden Leitungsöffnung austreten.

Das soeben beschriebene Verschliessen der Leitungsöffnungen durch die Aussenfläche des Verbindungskörpers kann auch ausgenutzt werden um bei eingesetztem Suppressor die ausserhalb der Anschlussöffnung des Suppressors liegenden Bereiche der darauf ausgerichteten Leitungsöffnung zu verschliessen. Damit können problemlos Leitungsöffnungen verwendet werden, die grösser als die Anschlussöffnungen der Suppressoren sind. Dieser Vorteil kann ausgenutzt werden indem eine Leitungsöffnung bewusst grösser als die Anschlussöffnungen der Suppressoren gestaltet wird, so dass die Anschlussöffnungen verschiedener Suppressoren an unterschiedlichen Stellen auf diese Leitungsöffnung ausrichtbar sind. Anstelle einer einzelnen Leitungsöffnung können auch mehrere Teilöffnungen verwendet werden, die durch Leitungen direkt miteinander verbunden sind. Die Anschlussöffnungen verschiedener Suppressoren können dann auf unterschiedliche Teilöffnungen dieser Leitungsöffnung ausgerichtet werden. Die miteinander verbundenen Teilöffnungen gelten im Sinne der hier verwendeten Definition als eine Leitungsöffnung. Durch die Verwendung von wenigstens einer grösseren Leitungsöffnung, auf die die Anschlussöffnungen verschiedener Suppressoren an unterschiedlichen Stellen ausrichtbar sind, ergeben sich verschiedene vorteilhafte Möglichkeiten um die an einem gemeinsamen Verbindungskörper befestigten Suppressoren abwechselnd in die verschiedenen Leitungszweige einzusetzen, wobei es nicht notwendig ist, dass die Suppressoren auf einer gemeinsamen, geschlossenen Bahn bewegbar gelagert sind.
Besonders einfach gestaltet sich das zyklische Ersetzen der Suppressoren wenn der Verbindungskörper um eine Rotationsachse drehbar gelagert ist, so dass jede Anschlussöffnung entlang einer Kreisbahn bewegbar ist. Es kann sich z.B. um einen zylinderförmigen Verbindungskörper handeln, wobei die Anschlussöffnungen der Suppressoren entweder in der Mantelfläche oder in einer Stirnfläche des Zylinders vorgesehen sein können.

Um das zyklische Regenerieren der Suppressoren zu Automatisieren kann jeder Suppressor mit einem Bewegungsantrieb gekoppelt werden, der mit einer Steuereinrichtung verbunden ist. Durch Aktivieren des Bewegungsantriebs kann dabei jeder Suppressor in die verschiedenen Leitungszweige eingesetzt werden.

Da mit der beschriebenen Vorrichtung auch häufiges Regenerieren der Suppressoren problemlos und ohne Behinderung des Analysevorgangs möglich ist, werden bevorzugt Suppressoren mit einem im Vergleich zu den herkömmlichen Suppressorsäulen relativ kleinen Volumen, vorzugsweise von 50 bis 500 mm³, verwendet. Dabei wird der in den Analysezweig eingesetzte Suppressor vorzugsweise nach der Analyse von jeweils einer Probe ausgewechselt.

Die Erfindung ist im Folgenden anhand von Ausführungsbespielen näher beschrieben. Es zeigen:
- Figur 1: Die schematische Darstellung einer Vorrichtung zur Ionenchromatografie mit einem Analysezweig und zwei Behandlungszweigen und mit drei Suppressoren, die abwechselnd in diese Leitungszweige eingesetzt werden,
- Figur 2: Die in Figur 1 gezeigte Vorrichtung in einem anderen Verfahrensstadium,
- Figur 3: Die schematische Darstellung einer Vorrichtung zur Ionenchromatografie mit drei Leitungszweigen und drei Suppressoren, von denen jeweils einer in jeden der Leitungszweige eingesetzt ist,
- Figur 4: Die schematische Darstellung einer Vorrichtung zur Ionenchromatografie mit einem Analysezweig und einem Behandlungszweig, der über ein Ventilelement wahlweise mit einer von zwei Behandlungsmittel-Quellen verbindbar ist,
- Figur 5: Die Schnittdarstellung des Suppressorteils einer Vorrichtung zur Ionenchromatografie gemäss Ebene A-A in Figur 6,
- Figur 6: Die Schnittdarstellung gemäss Ebene B-B in Figur 5,
- Figur 7: Die Schnittdarstellung eines alternativen Suppressorteils einer Vorrichtung zur Ionenchromatografie gemäss Ebene C-C in Figur 8,
- Figur 8: Die Ansicht des in Figur 7 dargestellten Suppressorteils von oben, und
- Figur 9: Die Schnittdarstellung eines weiteren Suppressorteils, in dem die Suppressoren an einem gemeinsamen, linear bewegbar gelagerten Verbindungsteil befestigt sind.

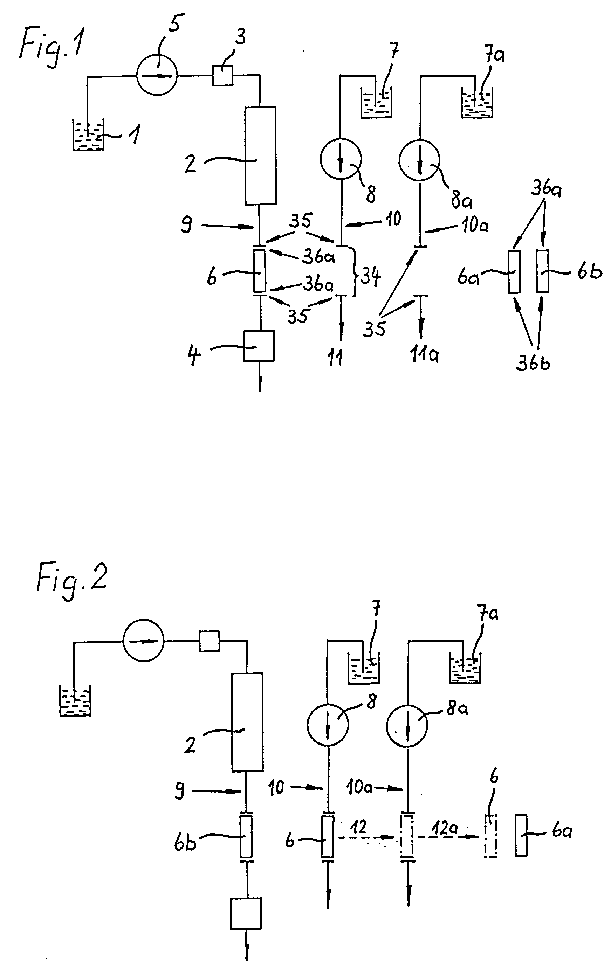

Die in Figur 1 in schematischer Form dargestellte Vorrichtung zur Ionenchromatografie weist einen Analysezweig 9 und zwei Behandlungszweige 10, 10a auf. Der Analysezweig 9 verbindet den Ausgang einer Trennsäule 2 mit einem Detektor 4. Die Detektion der getrennten Ionen erfolgt in der Regel durch Messung der Leitfähigkeit. Eingangsseitig wird der Trennsäule über eine Pumpe 5 ein Elutionsmittel zugeführt. Zwischen der Pumpe 5 und der Trennsäule 2 befindet sich eine Einrichtung 3 zur Aufgabe einer zu analysierenden Probe. In den Analysezweig 9 ist ein erster Suppressor 6 eingesetzt. Während der Analyse wird das von der Trennsäule 2 ablaufende Eluat durch den ersten Suppressor 6 geleitet und anschliessend dem Detektor 4 zugeführt. Der Suppressor 6 hat die Aufgabe, die Leitfähigkeit des Elutionsmittels 1 zu reduzieren, so dass die in dem von der Trennsäule 2 ablaufenden Eluat enthaltenen Ionen der Probe genauer detektiert werden können. Dabei findet in dem Suppressor 6 ein Ionentausch statt und mit der Zeit wird die Kapazität des Suppressors erschöpft.

Der in den Analysezweig 9 eingesetzte Suppressor 6 muss daher von Zeit zu Zeit regeneriert werden. Um auch während der Regeneration des Suppressors weitere Analysen durchführen zu können wird der in den Analysezweig 9 eingesetzte Suppressor 6 nach jeweils einer Analyseperiode durch einen regenerierten Suppressor ersetzt. Zur Regeneration des ersetzten Suppressors sind zwei Behandlungszweige 10, 10a vorgesehen, die über je eine Pumpe 8, 8a mit je einer Behandlungsmittel-Quelle 7, 7a verbunden sind. Auf der anderen Seite sind die Behandlungszweige 10, 10a mit Abflussleitungen 11, 11a verbunden. Um die Suppressoren in die verschiedenen Leitungszweige 9, 10, 10a einsetzen zu können, weist jeder dieser Leitungszweige eine Lücke 34 auf, die durch zwei Leitungsöffnungen 35 begrenzt ist. Die Suppressoren 6, 6a, 6b haben je eine erste Anschlussöffnung 36a, die durch ein als Ionentauscher-Reservoir dienendes Leitungsstück mit einer zweiten Anschlussöffnung 36b verbunden ist. Die einzelnen Suppressoren sind nun derart bewegbar gelagert, dass sie in die verschiedenen Leitungszweige eingesetzt werden können. Ist ein Suppressor 6 in einen Leitungszweig 9 eingesetzt, so sind seine Anschlussöffnungen 36a, 36b auf die Leitungsöffnungen 35 der Lücke dieses Leitungszweigs 9 ausgerichtet. Der Suppressor 6 überbrückt somit als Leitungsstück die Lücke des Leitungszweigs 9.

In Figur 2 ist dieselbe Vorrichtung zu einem etwas späteren Zeitpunkt dargestellt, nachdem der Suppressor 6 durch einen regenerierten Suppressor 6b ersetzt wurde. Der ersetzte Suppressor 6 wurde in den ersten Behandlungszweig 10 eingesetzt und durch die Pumpe 8 wird zur Regeneration eine Säure durch den ersetzten Suppressor 6 gepumpt. Nach einer gewissen Zeit wird der Suppressor 6 aus dem ersten Behandlungszweig 10 entfernt und in Pfeilrichtung 12 zu der Lücke des zweiten Behandlungszweigs 10a bewegt und dort eingesetzt. Danach wird durch die Pumpe 8a Wasser durch den Suppressor 6 gepumpt. Schliesslich wird der danach wieder vollständig regenerierte Suppressor 6 auch aus dem zweiten Behandlungszweig 10a entfernt und in Pfeilrichtung 12a in eine Warteposition gebracht, in der er die ursprüngliche Position (siehe Figur 1) des Suppressors 6a einnimmt. In einem nächsten Schritt würde der nunmehr in den Analysezweig 9 eingesetzte Suppressor 6b durch den regenerierten Suppressor 6a ersetzt und der Suppressor 6b würde nacheinander in die Behandlungszweige 10, 10a eingesetzt, gleich wie dies für den Fall des Suppressors 6 soeben beschrieben wurde. Die Suppressoren 6, 6a, 6b werden zyklisch in die Leitungszweige 9, 10, 10a eingesetzt, wobei während jeweils einer Analyseperiode einer der Suppressoren in den Analysezweig 9 eingesetzt ist.

Bei dem soeben beschriebenen Beispiel stehen immer zwei vollständig regenerierte Suppressoren bereit, bevor der Dritte, in den Analysezweig eingesetzte Suppressor, ersetzt werden muss. Ersichtlicherweise könnte daher bei ansonsten gleichbleibendem Verfahrensablauf auf einen der Suppressoren verzichtet werden.

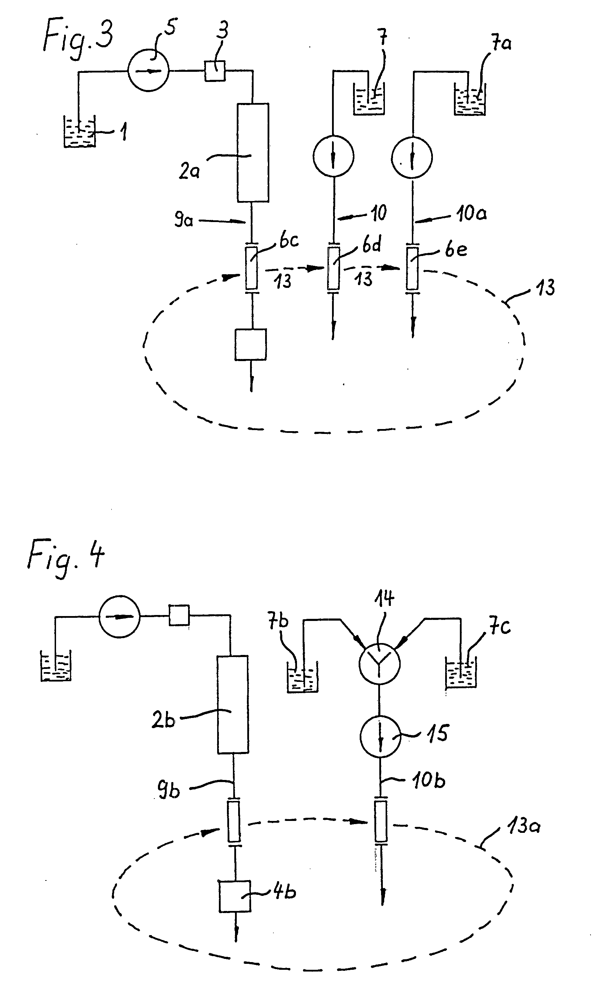

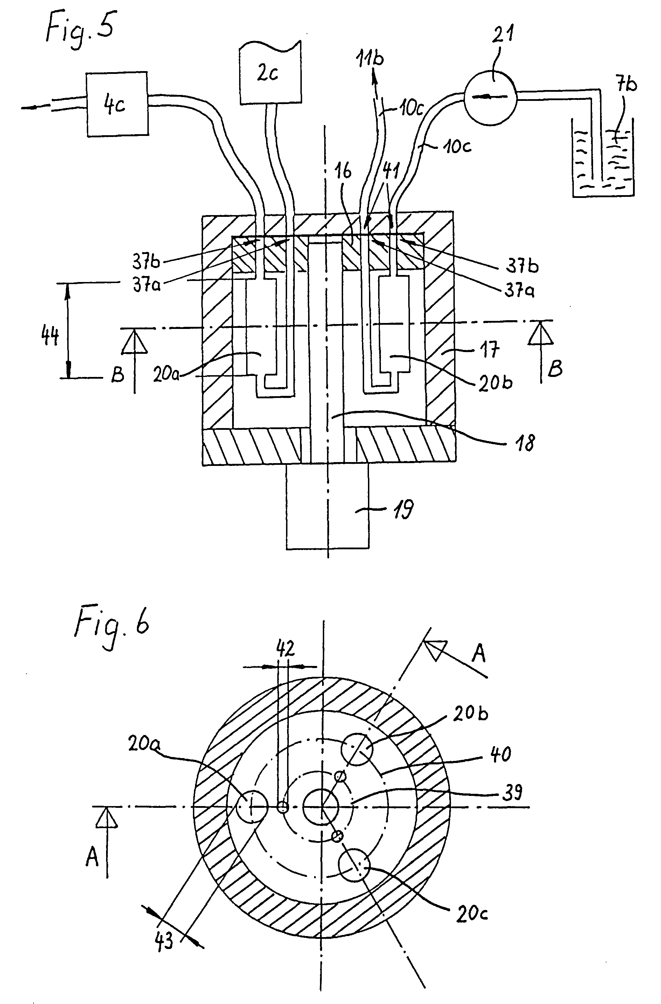

In dem Beispiel der Figuren 1 und 2 ist das Grundprinzip der Vorrichtung dargestellt. Aus praktischen Gründen werden jedoch etwas abweichende Verfahrensabläufe bevorzugt. Ein solch bevorzugter Verfahrensablauf ist in Figur 3 dargestellt. Die Vorrichtung gemäss Figur 3 entspricht an sich in allen Punkten derjenigen gemäss Figur 1 und 2. Sie unterscheidet sich lediglich durch die Position der Suppressoren. Während einer Analyseperiode befindet sich hier in jedem Leitungszweig 9a, 10, 10a ein Suppressor 6c, 6d, 6e. Dies hat mehrere Vorteile: Während der meisten Zeit ist in jedem Leitungszweig ein Suppressor eingesetzt, so dass das Auslaufen von Behandlungsflüssigkeit aus vorübergehend nicht besetzten Lücken von Leitungszweigen weitgehend verhindert werden kann. Ausserdem kann die Zeit einer Analyseperiode im vollen Umfang zum Regenerieren der in die Behandlungszweige 10, 10a eingesetzten Suppressoren 6d, 6e genutzt werden. Die Wartepositionen der in Figur 1 gezeigten Suppressoren 6a und 6b entfallen, da bei der Anordnung gemäss Figur 3 der in den zweiten Behandlungszweig 10a eingesetzte Suppressor 6e beim nächsten Wechsel direkt als regenerierter Suppressor in den Analysezweig 9a eingesetzt wird. Weitere Vorteile ergeben sich mit Bezug auf die Konstruktion der erforderlichen Vorrichtung, was aus den Figuren 5 bis 8 ersichtlich ist.

Figur 4 zeigt in schematischer Form eine Vorrichtung zur Ionenchromatografie mit lediglich zwei Leitungszweigen 9b und 10b. Das Vorgehen beim zyklischen Ersetzen der Suppressoren entspricht dem zu Figur 3 gesagten. Hingegen kann der einzige Behandlungszweig 10b über ein Schaltventil 14 wahlweise mit einer von mehreren Behandlungsmittel-Quellen 7b, 7c verbunden werden.

Figur 5 zeigt die Schnittdarstellung einer Suppressoranordnung für eine Vorrichtung zur Ionenchromatografie wie sie schematisch in Figur 3 dargestellt ist. In Figur 6 ist die Schnittdarstellung gemäss Ebene B-B von Figur 5 dargestellt. Die Anordnung enthält 3 Suppressoren 20a, 20b, 20c, die an einem gemeinsamen Verbindungskörper 16 befestigt sind. Der Verbindungskörper 16 ist in einem Gehäuse 17 drehbar gelagert und durch eine Rotorwelle 18 mit einem als Bewegungsantrieb dienenden Motor 19 verbunden. Sämtliche ersten Anschlussöffnungen 37a liegen auf einer ersten Kreislinie 39 und sämtliche zweiten Anschlussöffnungen 37b liegen auf einer zweiten Kreislinie 40, wobei die Zentren der beiden Kreise mit der Drehachse des Verbindungskörpers 16 zusammenfallen. Durch Drehen des Verbindungskörpers 16 sind somit alle ersten Anschlussöffnungen entlang einer ersten Kreisbahn 39 und alle zweiten Anschlussöffnungen entlang einer zweiten Kreisbahn 40 bewegbar. Bei diesen Kreisbahnen handelt es sich um eine spezielle Form einer geschlossenen Bahn, entlang der die Suppressoren bzw. deren Anschlussöffnungen bewegbar sind. Die Suppressoren sind ausserdem in gleichen Abständen über die Länge dieser Kreisbahnen verteilt angeordnet.

Entlang diesen Kreisbahnen sind mit denselben Abständen die Leitungsöffnungen 41 der Lücken von drei Leitungszweigen angeordnet, von denen in Figur 5 jedoch lediglich zwei 9c, 10c dargestellt sind. Bei dem Leitungszweig 9c handelt es sich um den Analysezweig, der den Ausgang der Trennsäule 2c mit einem Detektor 4c verbindet. Bei dem Leitungszweig 10c handelt es sich um einen Behandlungszweig, der einseitig mit einer Behandlungsmittel-Quelle 7b verbunden ist und auf der anderen Seite zu einem Abfluss 11b führt. Durch Drehen des gemeinsamen Verbindungskörpers 16, der zu diesem Zweck mit einem Drehantrieb 19 gekoppelt ist, können die einzelnen Suppressoren 20a bis 20c gemäss dem zu Figur 3 beschriebenen Verfahren abwechslungsweise in die einzelnen Leitungszweige eingesetzt werden.

Die Anschlussöffnungen 37a und 37b befinden sich bei diesem Beispiel in einer Aussenfläche des Verbindungskörpers 16. Durch die bereits beschriebene Lagerung dieses Verbindungskörpers ist sichergestellt, dass sich die Leitungsöffnungen 41 der Lücken der verschiedenen Leitungszweige immer im Bereich dieser Aussenfläche, hier der Stirnfläche des Verbindungskörpers befinden. Damit wird erreicht, dass die Leitungsöffnungen 41 beim Drehen des Verbindungskörpers durch dessen Aussenfläche verschlossen werden, sofern sich nicht die Anschlussöffnung 37a, 37b eines Suppressors im Bereich einer Leitungsöffnung befindet. Damit ist sichergestellt, dass die in den Leitungszweigen geförderten Flüssigkeiten zu keinem Zeitpunkt im Bereich der Leitungsöffnungen austreten können.

Es ist darauf hinzuweisen, dass die tatsächlichen Grössenverhältnisse in den Figuren 5 bis 9 nicht wirklichkeitsgemäss wiedergegeben sind. Als Verbindungsleitungen werden bei der Flüssigchromatografie in der Regel Kapillaren mit einem Innendurchmesser von ca. 0,2 bis 0,5 mm verwendet. Die etwas dickeren, mit Ionentauscher-Harz gefüllten Körper 20a bis 20c der Suppressoren haben vorzugsweise einen Innendurchmesser 43 von 2 bis 5 mm und eine Länge 44 von ca. 20 bis 50 mm.

Es sei ausserdem darauf hingewiesen, dass die Anzahl der in einer Anordnung nach Figur 5 verwendeten Suppressoren und Leitungszweige ohne weiteres geändert werden kann. Insbesondere können auch lediglich zwei Suppressoren und zwei Leitungszweige verwendet werden, so dass sich eine Anordnung gemäss dem in Figur 4 dargestellten Prinzip realisieren lässt. Ausserdem könnten ohne weiteres mehr Suppressoren als Leitungszweige verwendet werden. An der Struktur der Vorrichtung ändert sich dadurch nichts.

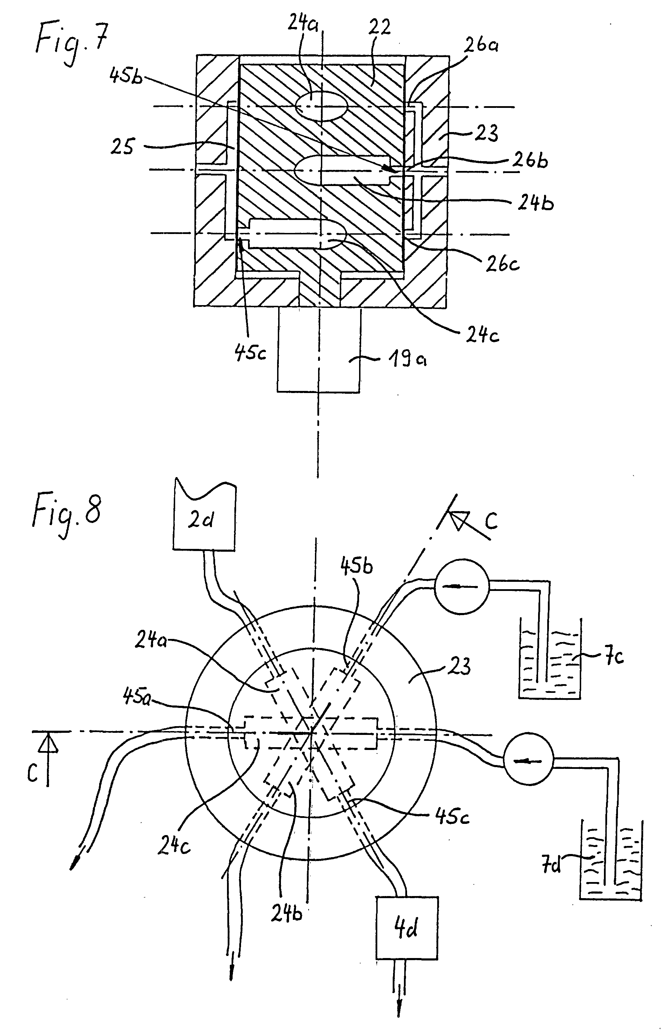

Die Figuren 7 und 8 zeigen eine alternative Ausführungsvariante einer Suppressoranordnung, wobei Figur 7 eine Schnittdarstellung gemäss Ebene C-C in Figur 8 zeigt. Auch hier werden drei Suppressoren 24a bis 24c verwendet, die an einem gemeinsamen Verbindungskörper 22 befestigt sind. Bei dem Verbindungskörper handelt es sich um einen zylindrischen Körper, der um seine Körperachse drehbar gelagert ist. Auch hier hat jeder Suppressor 24a bis 24c zwei Anschlussöffnungen 45a bis 45c, die auf gegenüberliegenden Seiten in der Mantelfläche des zylindrischen Verbindungskörpers 22 angeordnet sind. Die Suppressoren sind bei diesem Beispiel über die Länge des zylindrischen Verbindungskörpers verteilt angeordnet und im Gegensatz zu dem Beispiel von Figur 5 ist es hier nicht möglich, die Anschlussöffnungen der einzelnen Suppressoren durch Drehen des Verbindungskörpers abwechselnd in die selbe Lage zu bringen. Um die Suppressoren dennoch abwechselnd in die in Figur 8 dargestellten drei Leitungszweige einsetzen zu können werden zur Begrenzung der Lücken der Leitungszweige grössere Leitungsöffnungen verwendet, so dass es dennoch möglich ist, jeden Suppressor in jeden der Leitungszweige einzusetzen. Die Anschlussöffnungen der verschiedenen Suppressoren werden dabei an unterschiedlichen Stellen auf die speziell vergrösserten Leitungsöffnungen ausgerichtet. In Figur 7 sind zwei verschiedene Möglichkeiten zur Vergrösserung der Leitungsöffnungen dargestellt. Bei der in der linken Hälfte von Figur 7 dargestellten Leistungsöffnung 25 handelt es sich um einen länglichen Schlitz, der sich über einen wesentlichen Teil der Länge des rohrförmigen Gehäuses 23 erstreckt, in dem der Verbindungskörper 22 drehbar gelagert ist. Ersichtlicherweise wird der nicht auf die Anschlussöffnung 45c ausgerichtete Teil der Leitungsöffnung 25 durch die Aussenfläche des zylindrischen Verbindungskörpers verschlossen. Auf der rechten Seite von Figur 7 ist eine alternative Ausführungsvariante dargestellt, bei der anstelle eines länglichen Schlitzes 25 mehrere Teilöffnungen 26a bis 26c vorgesehen sind, die durch Leitungen miteinander verbunden sind.

Der Verbindungskörper 22 ist zum automatischen Wechseln und Regenerieren der Suppressoren mit einem Drehantrieb 19a gekoppelt.

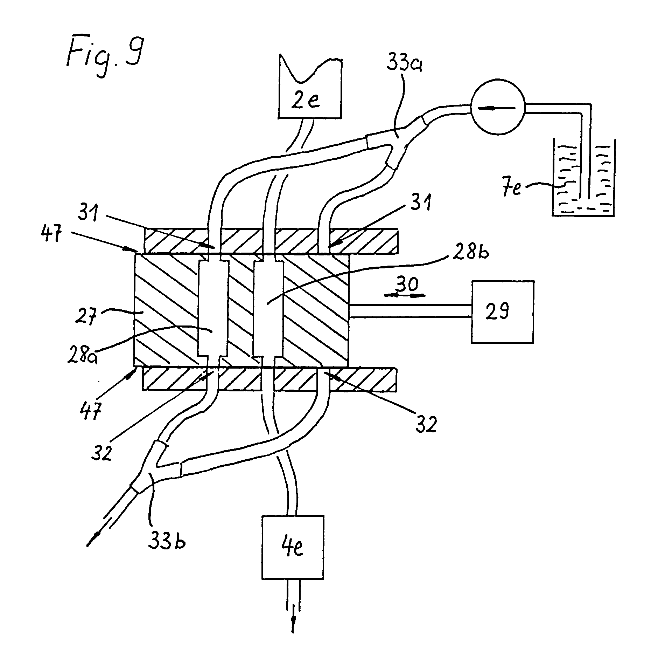

Schliesslich zeigt Figur 9 die Schnittdarstellung einer weiteren Ausführungsvariante einer Suppressoranordnung, bei der die Suppressoren 28a, 28b ebenfalls an einem gemeinsamen Verbindungskörper 27 befestigt sind. Hier handelt es sich für einmal nicht um einen drehbar gelagerten Verbindungskörper sondern um einen linear verschiebbar gelagerten Körper mit zwei planparallelen Begrenzungsflächen 47. Das Funktionsprinzip entspricht dennoch weitgehend demjenigen des in Figur 7 gezeigten Beispiels. In diesem Fall ist es lediglich ein Leitungszweig, dessen Leitungsöffnungen aus mehreren miteinander verbundenen Teilöffnungen 31, 32 bestehen. Auch hier werden die "nicht benötigten" Teilöffnungen durch die Aussenfläche 47 des gemeinsamen Verbindungskörpers 27 verschlossen. Der Verbindungskörper 27 ist in Pfeilrichtung 30 bewegbar gelagert und mit einem linear Antrieb 29 gekoppelt. Eine solche Anordnung könnte z.B. in einer Vorrichtung gemäss Figur 4 verwendet werden. Mit nur unwesentlich grösserem Aufwand lässt sich diese Anordnung auch um einen Behandlungszweig und einen zusätzlichen Suppressor erweitern, so dass ein Betrieb gemäss dem zu Figur 3 beschriebenen Verfahren möglich ist. Der Verbindungskörper würde dabei vorzugsweise in einer zusätzlichen Richtung bewegt, so dass er zyklisch abwechselnd in drei verschiedene Positionen bringbar wäre.

## Patentansprüche

1. Verfahren zum zyklischen Regenerieren von mehreren Suppressoren (6, 6a, 6b) einer Vorrichtung zur Ionenchromatografie, bei dem während einer Analyseperiode jeweils einer der Suppressoren als Leitungsstück (6) in einen ersten Leitungszweig (9) eingesetzt ist, der den Ausgang einer Trennsäule (2) mit einem Detektor (4) verbindet, wobei dieser Suppressor (6) nach jeweils einer Analyseperiode durch einen regenerierten Suppressor (6b) ersetzt und der ersetzte Suppressor (6) regeneriert wird, dadurch gekennzeichent, dass
ein ersetzter Suppressor zum Regenerieren nacheinander in einen oder mehrere weitere Leitungszweige (10, 10a) eingesetzt wird und über diese jeweils wenigstens eine Behandlungsflüssigkeit (7, 7a) durch den eingesetzten Suppressor geleitet wird, bevor dieser später wieder als regenerierter Suppressor in den ersten Leitungszweig eingesetzt wird, und dass ein Suppressor beim Einsetzen in einen Leitungszweig relativ zu dem Leitungszweig in eine Lage bewegt wird, in der er als Leitungsstück eine Lücke (34) dieses Leitungszweigs überbrückt.

2. Verfahren nach Anspruch 1, **dadurch gekennzeichnet, dass** wenigstens gleich viele Suppressoren (6c, 6d, 6e) verwendet werden wie Leitungszweige (9, 10, 10a) vorhanden sind und die Suppressoren in einer festen Reihenfolge, in der jeder Suppressor einen Vorgänger und einen Nachfolger hat, abwechselnd in die Leitungszweige (9, 10, 10a) eingesetzt werden, wobei während jeder Analyseperiode in jedem Leitungszweig (9, 10, 10a) ein Suppressor (6c, 6d, 6e) eingesetzt ist und nach jeweils einer Analyseperiode jeder in einen Leitungszweig eingesetzte Suppressor durch seinen Nachfolger ersetzt wird.

3. Vorrichtung zur Ionenchromatografie, mit mehreren Suppressoren (6, 6a, 6b) von denen während einer Analyseperiode jeweils einer (6) als Leitungsstück in einen ersten Leitungszweig (9) eingesetzt ist, der den Ausgang einer Trennsäule (2) mit einem Detektor (4) verbindet, wobei Mittel vorgesehen sind, um diesen Suppressor (6) nach jeweils einer Analyseperiode durch einen regenerierten Suppressor (6b) zu ersetzten und den ersetzten Suppressor zu regenerieren, **dadurch gekennzeichnet, dass** zum Regenerieren eines ersetzten Suppressors einer oder mehrere weitere Leitungszweige (10, 10a) vorgesehen sind, in die der zu regenerierende Suppressor nacheinander einsetzbar ist und von denen jeder mit wenigstens einer Behandlungsmittel-Quelle (7, 7a) verbunden ist, so dass ein Behandlungsmittel durch den in einen solchen Leitungszweig eingesetzten Suppressor geleitet werden kann, wobei zum Einsetzen der Suppressoren in die verschiedenen Leitungszweige (9, 10, 10a) jeder Leitungszweig eine Lücke (34) aufweist und jeder Suppressor derart bewegbar gelagert ist, dass er in Bezug auf jeden Leitungszweig (9, 10, 10a) in eine Lage bringbar ist, in derer als Leitungsstück die Lücke des betreffenden Leitungszweigs überbrückt.

4. Vorrichtung nach Anspruch 3, **dadurch gekennzeichnet, dass** jeder Suppressor (6, 6a, 6b) eine erste Anschlussöffnung (36a) aufweist, die durch ein als Ionentauscher-Reservoir dienendes Leitungsstück mit einer zweiten Anschluss-Oeffnung (36b) verbunden ist, dass die Lücken (34) der Leitungszweige (9, 10, 10a) durch je zwei Leitungsöffnungen (35) begrenzt sind, und dass jeder Suppressor (6, 6a, 6b) zum Einsetzen in einen Leitungszweig (9, 10, 10a) in eine Lage bringbar ist, in der jede seiner Anschluss-Oeffnungen (36a, 36b) auf eine der Leitungsöffnungen (35) der Lücke des betreffenden Leitungszweigs ausgerichtet ist.

5. Vorrichtung nach Anspruch 4, **dadurch gekennzeichnet, dass** jeder Suppressor (20a, 20b, 20c) auf einer geschlossenen Bahn bewegbar gelagert ist und die Lücken der Leitungszweige (9c, 10c) in Bezug auf diese Bahn derart angeordnet sind, dass jeder Suppressor durch eine entlang seiner Bahn verlaufende Bewegung in einen beliebigen Leitungszweig (9c, 10c) einsetzbar ist.

6. Vorrichtung nach Anspruch 5, **dadurch gekennzeichnet, dass** alle Suppressoren (20a, 20b, 20c) auf einer gemeinsamen, geschlossenen Bahn bewegbar gelagert sind.

7. Vorrichtung nach einem der Ansprüche 5 oder 6, **dadurch gekennzeichnet, dass** die Suppressoren (20a, 20b, 20c) durch eine Wirkverbindung (16) derart gekoppelt sind, dass sie nur gemeinsam bewegt werden können, so dass die Position eines Suppressors (20a) von der Position der anderen Suppressoren (20b, 20c) abhängig ist, und dass die Suppressoren (20a, 20b, 20c) in eine der Anzahl Suppressoren entsprechende Anzahl von Arbeitspositionen bringbar sind, in denen jeweils ein anderer Suppressor in den ersten, die Trennsäule (2c) mit dem Detektor (14) verbindenden Leitungszweig (9c) eingesetzt ist.

8. Vorrichtung nach einem der Ansprüche 3 bis 7, **dadurch gekennzeichnet, dass** alle Suppressoren (20a, 20b, 20c) an einem gemeinsamen, bewegbar gelagerten Verbindungskörper (16) befestigt sind.

9. Vorrichtung nach Anspruch 8, **dadurch gekennzeichnet, dass** sich die Anschlussöffnungen der Suppressoren (20, 24, 28) in einer Aussenfläche des Verbindungskörpers (16, 22, 27) befinden und der Verbindungskörper derart bewegbar gelagert ist, dass die Leitungsöffnungen der Leitungszweige immer im Bereich dieser Aussenfläche liegen und durch diese verschlossen sind, sofern sich nicht die Anschlussöffnung eines Suppressors (20, 24, 28) in ihrem Bereich befindet.

10. Vorrichtung nach Anspruch 9, **dadurch gekennzeichnet, dass** wenigstens eine Leitungsöffnung (25, 26, 31, 32) grösser als die Anschlussöffnungen der Suppressoren ist, so dass die Anschlussöffnungen verschiedener Suppressoren an unterschiedlichen Stellen auf diese Leitungsöffnung (25, 26, 31, 32) ausrichtbar sind, wobei der ausserhalb der Anschlussöffnungen liegende Bereich der Leitungsöffnung durch die Aussenfläche des Verbindungskörpers verschlossen ist.

11. Vorrichtung nach einem der Ansprüche 8 bis 10, **dadurch gekennzeichnet, dass** der Verbindungskörper (16, 22) um eine Rotationsachse drehbar gelagert ist, so dass jede Anschlussöffnung entlang einer Kreisbahn bewegbar ist.

12. Vorrichtung nach einem der Ansprüche 3 bis 11, **dadurch gekennzeichnet, dass** jeder Suppressor (20a, 20b, 20c) mit einem Bewegungsantrieb (19) gekoppelt ist und durch Aktivieren des Bewegungsantriebs in die verschiedenen Leitungszweige (9c, 10c) einsetzbar ist, und dass der Bewegungsantrieb (19) zum zyklischen Ersetzen und Regenerieren der Suppressoren (20a, 20b, 20c) mit einer Steuereinrichtung verbunden ist.

13. Vorrichtung nach einem der Ansprüche 3 bis 12, **dadurch gekennzeichnet, dass** die Suppressoren ein Volumen kleiner als 800 mm³ und vorzugsweise zwischen 50 und 500 mm³ haben, das mit einem Ionentauscher-Harz gefüllt ist.

## Claims

1. Method of cyclically regenerating a plurality of suppressors (6, 6a, 6b) of a device for ion-exchange chromatography, wherein during an analysis period in each case one of the suppressors is inserted as a pipe section (6) into a first pipework branch (9), the said first pipework branch connecting the outlet of a separation column (2) with a detector (4), and wherein the said suppressor (6) is substituted after in each case one analysis period by a regenerated suppressor (6b) and the substituted suppressor (6) is regenerated, **characterized in that** for regeneration a substituted suppressor is consecutively inserted into one or more further pipework branches (10, 10a) and in each case at least one treatment liquid (7, 7a) is fed via the said pipework branches through an inserted suppressor before the said suppressor is later again inserted as a regenerated suppressor into the first pipework branch, and that on insertion into a pipework branch, a suppressor is moved relative to the pipework branch into a position in which, as a pipe section, it bridges a gap (34) of the said pipework branch.

2. Method according to claim 1, **characterized in that** at least the same number of suppressors (6c, 6d, 6e) are used as pipework branches (9, 10, 10a) are available, and that the suppressors are inserted alternatingly into the pipework branches (9, 10, 10a) according to a fixed sequence in which each suppressor has a predecessor and a successor, wherein during each analysis period a suppressor (6c, 6d, 6e) is inserted in each pipework branch (9, 10, 10a) and that after in each case one analysis period each suppressor inserted into a pipework branch is substituted by its successor.

3. Device for ion-exchange chromatography with a plurality of suppressors (6, 6a, 6b) of which, during an analysis period, in each case one (6) is inserted as a pipe section into a first pipework branch (9), the said pipework branch connecting the outlet of a separating column (2) to a detector (4), wherein means are provided for substitution of the said suppressor (6) after in each case one analysis period by a regenerated suppressor (6b), as well as for regeneration of said substituted suppressor, **characterized in that** for regeneration of a substituted suppressor one or more further pipework branches (10, 10a) are provided, into which pipework branches the suppressor to be regenerated is able to be consecutively inserted, and of which pipework branches each is connected with at least one treatment agent source (7, 7a) so that a treatment agent can be fed through the suppressor inserted into such a pipework branch, wherein each pipework possesses a gap (34) for insertion of the suppressors into the different pipework branches (9, 10, 10a), and wherein each suppressor is mounted to be able to move in such a way that, in relation to each pipework branch (9, 10, 10a), the said suppressor can be brought into a position in which, as a pipe section, it bridges the gap of the pipework branch concerned.

4. Device according to claim 3, **characterized in that** each suppressor (6, 6a, 6b) possesses a first connection opening (36a) connected with a second connection opening (36b) by means of a pipe section serving as an ion-exchange reservoir, that the gaps (34) of the pipework branches (9, 10, 10a) are each determined by two pipe openings (35) and that for insertion into a pipework branch (9, 10, 10a) each suppressor (6, 6a, 6b) is able to be brought into a position in which each of its connection openings (36a, 36b) is aligned with one of the pipe openings (35) of the gap of the pipework branch concerned.

5. Device according to claim 4, **characterized in that** each suppressor (20a, 20b, 20c) is mounted to be able to move on an endless track and that the gaps of the pipework branches (9c, 10c) are arranged in relation to the said track in such a way that each suppressor can be inserted in any desired pipework branch (9c, 10c) by means of a movement running along its track.

6. Device according to claim 5, **characterized in that** all suppressors (20a, 20b, 20c) are mounted to be able to move on a common, endless track.

7. Device according to one of the claims 5 or 6, **characterized in that** the suppressors (20a, 20b, 20c) are coupled by an active connection (16) in such a way that they can only be moved together, so that the position of a suppressor (20a) is dependent on the position of the other suppressors (20b, 20c), and that the suppressors (20a, 20b, 20c) are able to be brought into a number of working positions that correspond to the number of suppressors, in which working positions in each case another suppressor is inserted into the first pipework branch (9c) connecting the separation column (2c) with the detector (4)

8. Device according to one of the claims 3 to 7, **characterized in that** all suppressors (20a, 20b, 20c) are attached to a common connecting body (16) mounted to be able to move.

9. Device according to claim 8, **characterized in that** the connection openings of the suppressors (20, 24, 28) are located in an outer surface of the connecting body (16, 22, 27) and that the connecting body is mounted to be able to move in such a way that the pipe openings of the pipework branches always lie in the area of this outer surface and are closed by the said outer surface, in so far as the connection opening of a suppressor (20, 24, 28) is not located in their vicinity.

10. Device according to claim 9, **characterized in that** at least one pipe opening (25, 26, 31, 32) is larger than the connection openings of the suppressors so that the connection openings of different suppressors can be aligned with different positions on this pipe opening (25, 26, 31, 32), wherein the area of the pipe opening lying beyond the connection openings is closed by the outer surface of the connecting body.

11. Device according to one of the claims 8 to 10, **characterized in that** the connecting body (16, 22) is mounted to rotate about a rotational axis so that each connection opening is able to be moved along a circular path.

12. Device according to one of the claims 3 to 11, **characterized in that** each suppressor (20a, 20b, 20c) is connected with a movement drive (19) and is able to be inserted into the different pipework branches (9c, 10c) by activation of the movement drive, and that, for cyclical substitution and regeneration of the suppressors (20a, 20b, 20c), the movement drive (19) is connected with a control device.

13. Device according to one of the claims 3 to 12, **characterized in that** the suppressors have a volume that is less than 800 mm³ and preferably between 50 and 500 mm³, said volume being filled with ion-exchange resin.

## Revendications

1. Procédé pour la régénération cyclique de plusieurs suppresseurs (6, 6a, 6b) d'un dispositif de chromatographie ionique, selon lequel pendant chaque période d'analyse, l'un des suppresseurs est placé sous la forme d'une partie de conduite (6) dans une première branche de conduite (9) qui relie la sortie d'une colonne de séparation (2) à un détecteur (4), ce suppresseur (6) étant remplacé après chaque période d'analyse par un suppresseur régénéré (6b) et le suppresseur remplacé (6) étant régénéré,
**caractérisé en ce qu'**un suppresseur remplacé est placé successivement dans une ou plusieurs autres branches de conduites (10, 10a) en vue d'être régénéré, et par l'intermédiaire de ces branches, au moins un liquide de traitement (7, 7a) traverse le suppresseur mis en place, avant que celui-ci ne soit remis plus tard dans la première branche de conduite comme suppresseur régénéré, et **en ce qu'**un suppresseur, lorsqu'il est placé dans une branche de conduite, est amené par rapport à celle-ci dans une position dans laquelle il couvre un interstice (34) prévu dans cette branche, sous la forme d'une partie de conduite.

2. Procédé selon la revendication 1, **caractérisé en ce qu'**on utilise au moins autant de suppresseurs (6c, 6d, 6e) qu'il y a de branches de conduites (9, 10, 10a), et les suppresseurs sont placés alternativement dans lesdites branches (9, 10, 10a) dans un ordre fixe dans lequel chaque suppresseur a un précurseur et un successeur, étant précisé que pendant chaque période d'analyse dans une branche (9, 10, 10a), un suppresseur (6c, 6d, 6e) est mis en place et qu'après chaque période d'analyse, chaque suppresseur mis en place dans une branche est remplacé par son successeur.

3. Dispositif de chromatographie ionique comportant plusieurs suppresseurs (6, 6a, 6b) qui sont placés chacun, pendant une période d'analyse, sous la forme d'une partie de conduite dans une première branche de conduite (9) qui relie la sortie d'une colonne de séparation (2) à un détecteur (4), des moyens étant prévus pour remplacer ce suppresseur (6) par un suppresseur régénéré (6b) après chaque période d'analyse, et pour régénérer le suppresseur remplacé,
**caractérisé en ce qu'**il est prévu, pour régénérer un suppresseur remplacé, une ou plusieurs autres branches de conduites (10, 10a) dans lesquelles le suppresseur à régénérer peut être placé successivement et qui sont reliées chacune à au moins une source de produit de traitement (7, 7a), de sorte qu'un produit de traitement peut traverser le suppresseur placé dans une telle branche, étant précisé qu'en vue de la mise en place des suppresseurs dans les différentes branches de conduites (9, 10, 10a), chaque branche présente un interstice (34) et chaque suppresseur est mobile de manière à pouvoir être amené par rapport à chaque branche (9, 10, 10a) dans une position dans laquelle il couvre l'interstice de la branche concernée, sous la forme d'une partie de conduite.

4. Dispositif selon la revendication 3, **caractérisé en ce que** chaque suppresseur (6, 6a, 6b) a une première ouverture de raccordement (36a) qui est reliée à une seconde ouverture de raccordement (36b) par une partie de conduite servant de réservoir échangeur d'ions, **en ce que** chaque interstice (34) des branches (9, 10, 10a) est délimité par deux ouvertures de conduite (35), et **en ce que** chaque suppresseur (6, 6a, 6b), pour être placé dans une branche (9, 10, 10a), est apte à être amené dans une position dans laquelle chacune de ses ouvertures de raccordement (36a, 36b) est alignée sur l'une des ouvertures de conduite (35) de l'interstice de la branche concernée.

5. Dispositif selon la revendication 4, **caractérisé en ce que** chaque suppresseur (20a, 20b, 20c) est monté pour être mobile sur une trajectoire fermée et les interstices des branches de conduites (9c, 10c) sont disposés par rapport à cette trajectoire de telle sorte que chaque suppresseur puisse être placé dans une branche quelconque (9c, 10e) grâce à un mouvement longeant la trajectoire dudit suppresseur.

6. Dispositif selon la revendication 5, **caractérisé en ce que** tous les suppresseurs (20a, 20b, 20c) sont montés pour être mobiles sur une trajectoire fermée commune.

7. Dispositif selon la revendication 5 ou 6, **caractérisé en ce que** les suppresseurs (20a, 20b, 20c) sont accouplés grâce à une liaison fonctionnelle (16) de manière à ne pouvoir être déplacés qu'ensemble, de sorte que la position d'un suppresseur (20a) dépend de la position des autres suppresseurs (20b, 20c), et **en ce que** les suppresseurs (20a, 20b, 20c) sont aptes à être amenés dans un nombre de positions de travail correspondant au nombre de suppresseurs, dans lesquelles un autre suppresseur est placé dans la première branche de conduite (9c) reliant la colonne de séparation (2c) au détecteur (14).

8. Dispositif selon l'une des revendications 3 à 7, **caractérisé en ce que** tous les suppresseurs (20a, 20b, 20c) sont fixés à un corps de liaison commun (16) qui est monté mobile.

9. Dispositif selon la revendication 8, **caractérisé en ce que** les ouvertures de raccordement des suppresseurs (20, 24, 28) se trouvent dans une surface extérieure du corps de liaison (16, 22, 27) et le corps de liaison est monté mobile de telle sorte que les ouvertures des branches se trouvent toujours dans la zone de cette surface extérieure et soient fermées par celle-ci dans la mesure où l'ouverture de raccordement d'un suppresseur (20, 24, 28) ne se trouve pas dans la zone desdites ouvertures de branches.

10. Dispositif selon la revendication 9, **caractérisé en ce qu'**au moins une ouverture de conduite (25, 26, 31, 32) est plus grande que les ouvertures de raccordement des suppresseurs, de sorte que les ouvertures de raccordement de différents suppresseurs peuvent être alignées à différents endroits sur cette ouverture de conduite (25, 26, 31, 32), la zone de l'ouverture de conduite située à l'extérieur des ouvertures de raccordement étant fermée par la surface extérieure du corps de liaison.

11. Dispositif selon l'une des revendications 8 à 10, **caractérisé en ce que** le corps de liaison (16, 22) est monté en rotation autour d'un axe de rotation, de sorte que chaque ouverture de raccordement est mobile suivant une trajectoire circulaire.

12. Dispositif selon l'une des revendications 3 à 11, **caractérisé en ce que** chaque suppresseur (20a, 20b, 20c) est accouplé à un mécanisme de mouvement (19) et peut être placé dans les différentes branches de conduites (9c, 10c) grâce à l'activation dudit mécanisme, et **en ce que** le mécanisme de mouvement (19), en vue du remplacement et de la régénération cycliques des suppresseurs (20a, 20b, 20c), est relié à un dispositif de commande.

13. Dispositif selon l'une des revendications 3 à 12, **caractérisé en ce que** les suppresseurs ont un volume inférieur à 800 mm³ et de préférence compris entre 50 et 500 mm³, qui est rempli d'une résine d'échange d'ions.
